# EUROPEAN PATENT SPECIFICATION

(11) **EP 2 170 130 B1**
(45) Date of publication and mention of the grant of the patent: **27.02.2013**
(21) Application number: 08784801.6
(22) Date of filing: 16.07.2008
(51) Int. Cl.: A47J 31/36

(54) **COFFEE MACHINE INFUSION GROUP**
INFUSIONSBAUGRUPPE FÜR EINE KAFFEEMASCHINE
GROUPE D'INFUSION DE MACHINE À CAFÉ

(30) Priority: 18.07.2007 IT MI20071441
(43) Date of publication of application: 07.04.2010
(73) Proprietor: De'Longhi S.p.A., 31100 Treviso (IT)
(72) Inventor: DE'LONGHI, Guiseppe, I-31100 Treviso (IT)
(74) Representative: Rapisardi, Mariacristina
(86) International application number: PCT/EP2008/005793
(87) International publication number: WO 2009/010275

(56) References cited:
- EP-A- 1 336 365
- EP-A- 1 360 919
- DE-A1- 19 848 370
- US-A1- 2006 065 128

## Description

The present invention relates to an infusion group for a machine for producing a coffee drink.

The traditional automatic or semi-automatic coffee machines comprise an infusion group having an infusion cylinder reversibly movable from a disengagement position to an engagement position with a closure piston for the creation of an infusion chamber into which the infusion water is conveyed which has been heated by a boiler, and conveyed through a suitable inner channelling to the closure piston.

The infusion cylinder instead has at its interior an expulsion piston which is moved in a coordinated manner with a scraper for the discharge of the load of spent coffee powder.

A functioning cycle in general comprises a step of loading the coffee powder load inside the infusion cylinder, a step of outgoing movement of the infusion cylinder towards the engagement position with the closure piston for the creation of the infusion chamber and the achievement of the infusion, and a step of return movement of the infusion cylinder which is disengaged from the closure piston for expelling the load of spent coffee powder and loading the new coffee powder load.

Such coffee machines can lament an excessive bulk due to the particular placement and structure of the infusion group and mechanisms with which it is equipped.

The increasingly heard market need to have the infusion cylinder dismountable, to be removed mainly for its cleaning and/or maintenance, has in general led to an increased structural complication of the infusion group.

The technical task which the present invention proposes is therefore that of making an infusion group for a machine for producing a coffee drink which permits eliminating the lamented technical drawbacks of the prior art.

In the scope of this technical task, one object of the invention is that of making a highly efficient and reliable infusion group for a coffee machine, easily accessible, compact, constructively and structurally simple.

The technical task, as well as these and other objects according to the present invention are achieved by making a infusion group for coffee machine in accordance with claim 1.

Other characteristics of the present invention are moreover defined in the dependent claims.

Further characteristics and advantages of the invention will be clearer from the description of one or more preferred but not exclusive embodiments of the infusion group for coffee machine according to the finding, illustrated as indicative and nonlimiting in the attached drawings, in which:
- Figures 1-5 show a preferred embodiment of the infusion group of a coffee machine in accordance with the present finding, in different operative positions which it progressively assumes during a functioning cycle; and
- Figures 6-10 show a second preferred embodiment of the infusion group of a coffee machine in accordance with the present finding, in different operative positions which it progressively assumes during a functioning cycle.

Equivalent parts of the different preferred embodiments of the present invention will be indicated in the description with the same reference number.

With reference to the mentioned figures, an infusion group of a coffee machine is shown indicated in its entirety with the reference number 1.

The infusion group 1 comprises a closure piston 3 and an infusion cylinder 4 subjectable to a reversible roto-translation movement between a position of engagement with the closure piston 3 for the creation of an infusion chamber 5 and a position of disengagement from the closure piston 3 for the loading of a coffee powder load, by means of a loader 50.

In a known way the closure piston 3 is preferably in hydraulic connection with a boiler from which it receives the infusion water, and is equipped with valve means for interception of the infusion water.

The infusion group 1 has an expulsion system of the spent coffee powder load from the infusion chamber 5, comprising an expulsion piston 29 displaceably housed in the infusion cylinder 4.

In particular the expulsion piston 29 is coaxially movable in translation relative to the infusion cylinder 4 between a retracted position adjacent to the base of the infusion cylinder 4 and an extracted position far from the base of the infusion cylinder 4.

Advantageously the expulsion system has mechanical driving means adapted for an interference with the expulsion piston 29, occurring due to the rotational component of the roto-translation movement of the infusion cylinder 4, for displacement of the expulsion piston 29 relative to the infusion cylinder 4.

The infusion group 1 further provides rotation means for accomplishing the rotational component of the roto-translation movement of the infusion cylinder 4. Such a rotation moves the infusion cylinder 4 between a first angular position of alignment with the loader and a second angular position of alignment with the closure piston 3.

Such a rotation means comprise a first cam 23 for the rotation of the infusion cylinder 4 in which a jutting projection 25 is engaged by the infusion cylinder 4 or by a carrier 9 of the infusion cylinder 4 or by the stem 33 of the expulsion piston 29.

The infusion group 1 further comprises a scraper 27 pivoted at the side of the access mouth of the infusion cylinder 4 and movable, through a second cam 121 operated mechanism, across the access mouth of the infusion cylinder 4 in a coordinated manner with the expulsion piston 29.

The second cam 121 operated mechanism, where the second cam 121 is preferably helical, comprises a hinging pin 123 having at a first its end the scraper 27 and at a second its end the second cam 121.

The scraper 27 is moved against and driven by a return spring (not shown) towards the rest position at the side of the access mouth to the infusion cylinder 4.

The driving means comprise an extraction element and a retraction element for said expulsion piston.

Preferably the driving means are supported below the infusion cylinder 4 on the internal side of a shell of the coffee machine where the infusion group 1 is housed.

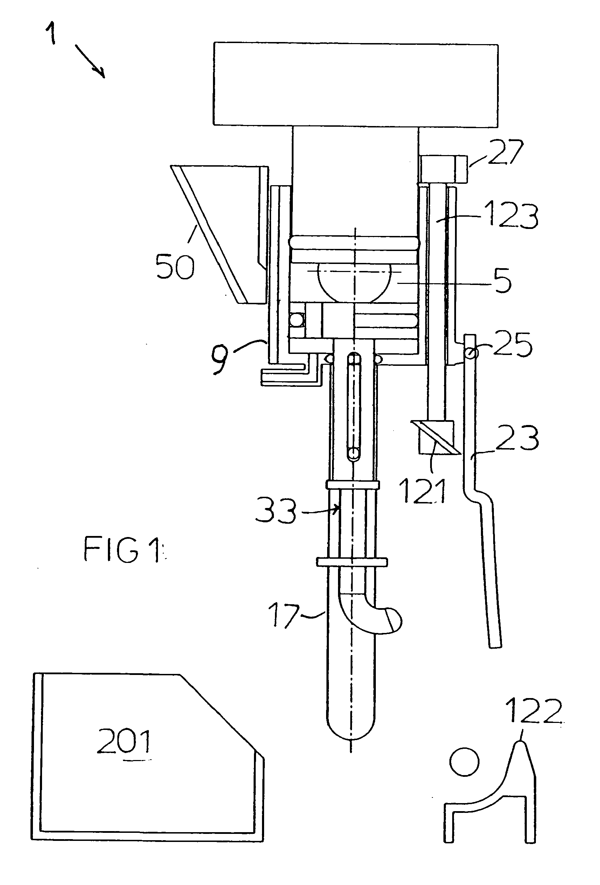

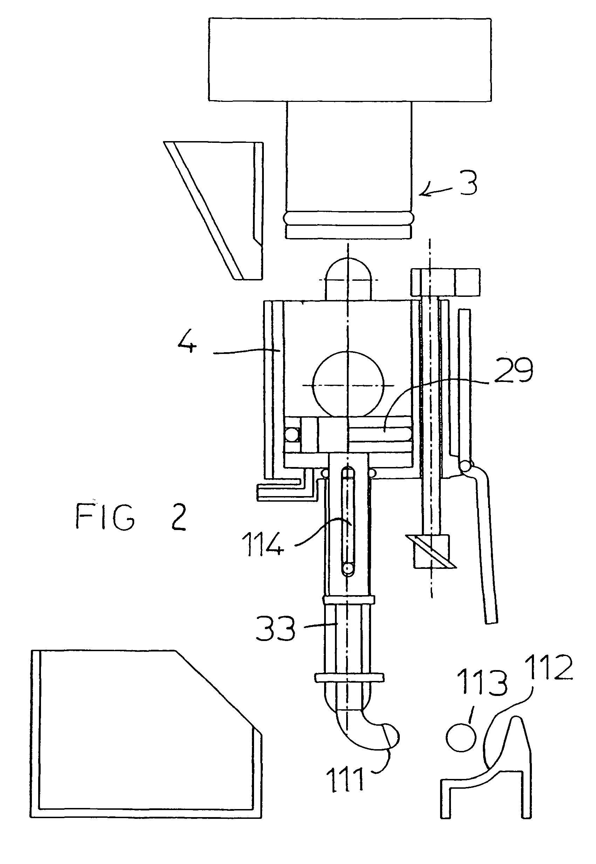

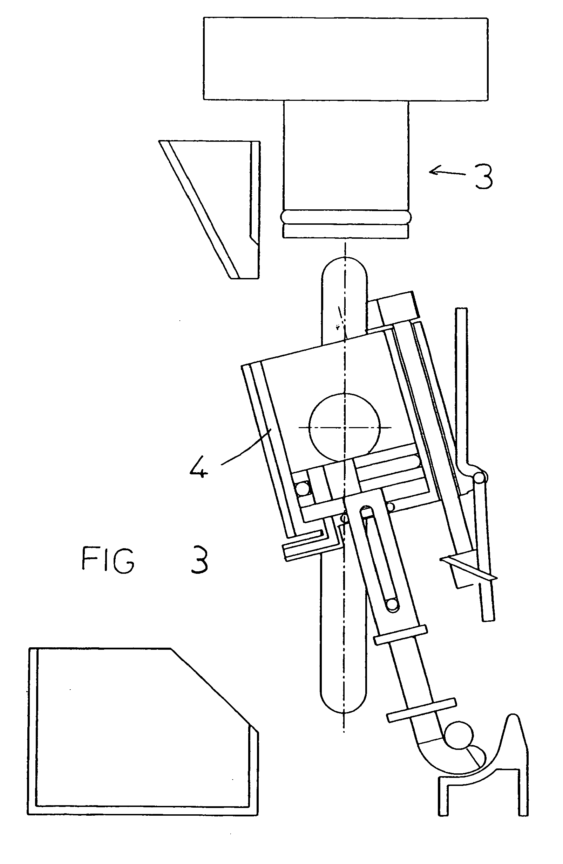

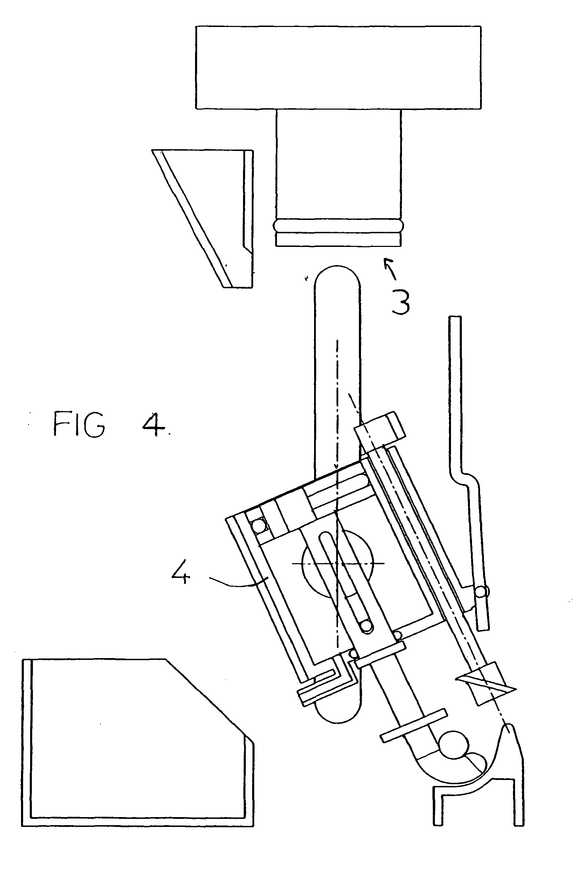

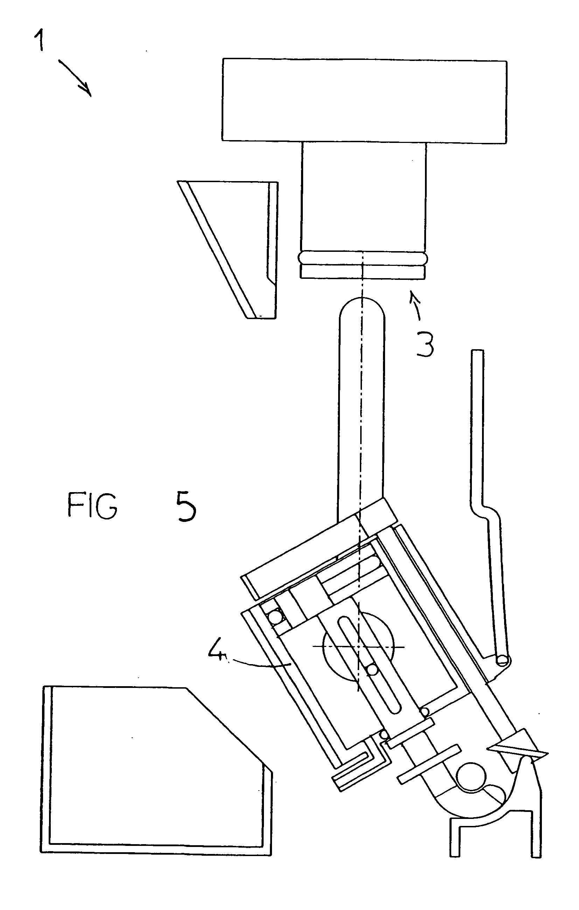

We make reference now to figs 1 to 5.

The extraction element is a resting element 112 on which rests a hook-shaped end 111 of the rod 33 of the expulsion piston 29 when the infusion cylinder 4 moves close to the driving means, while the retraction element is a retaining element 113 for retaining the hook shaped end 111 of the rod 33 when the infusion cylinder 4 moves away from the driving means.

Directly on the resting element 112 is provided an actuation surface 122 for actuation of the second cam 121 of the second cam 121 operated mechanism.

The rod 33 has at least two sections which are telescopically associated with the interposition of a spring 114, so to be able to axially shorten when the thrust force exerted thereon by the resting element 112 and/or by the retaining element 113 prevails or lengthen when the thrust force of the spring 114 prevails.

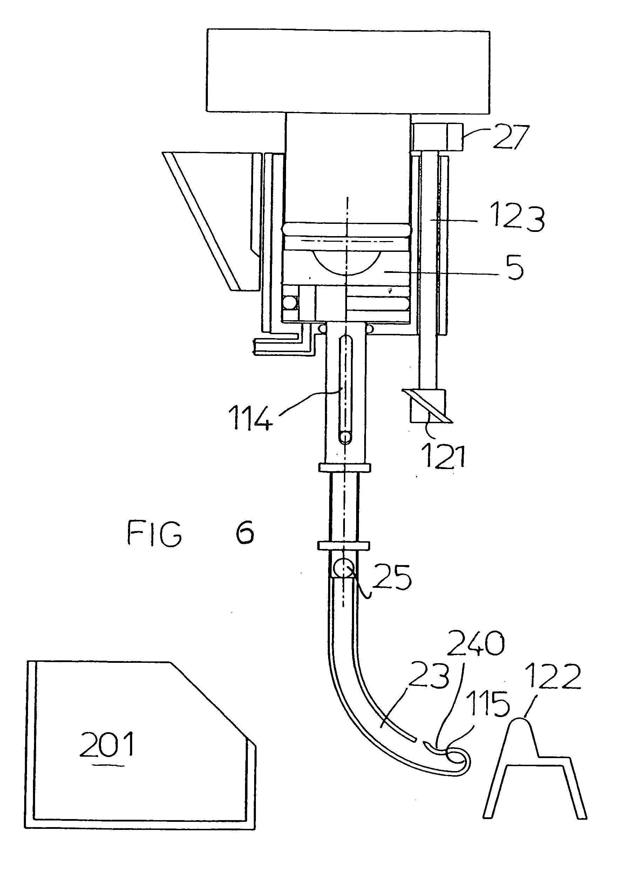

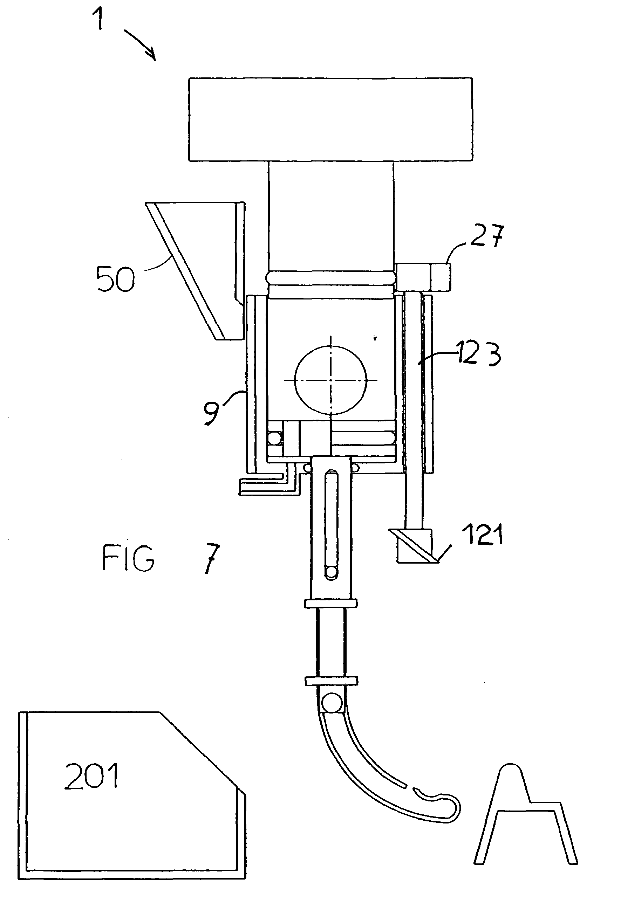

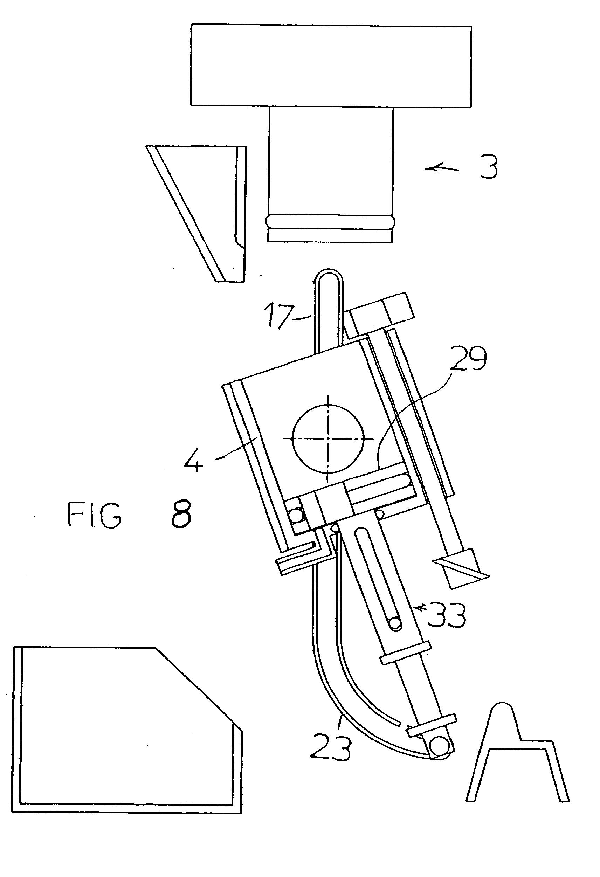

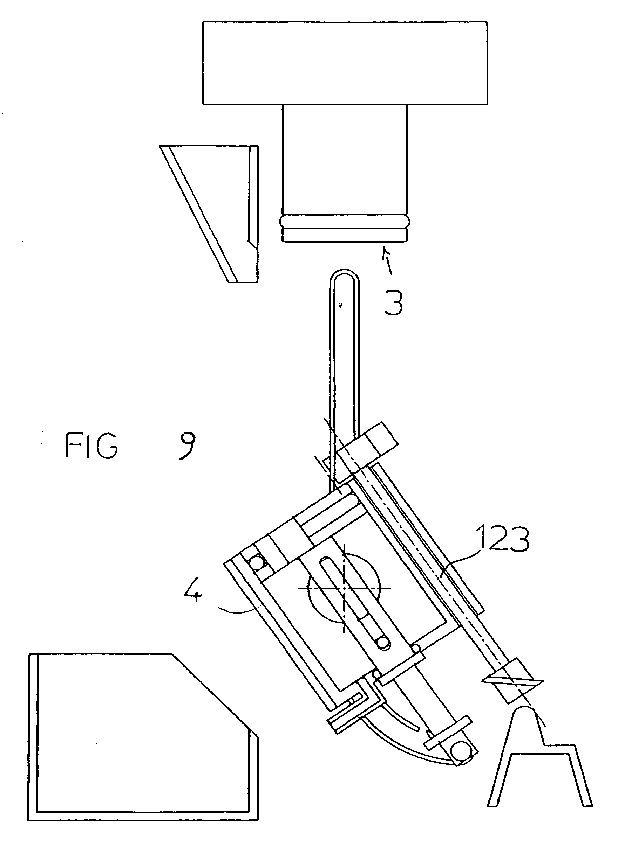

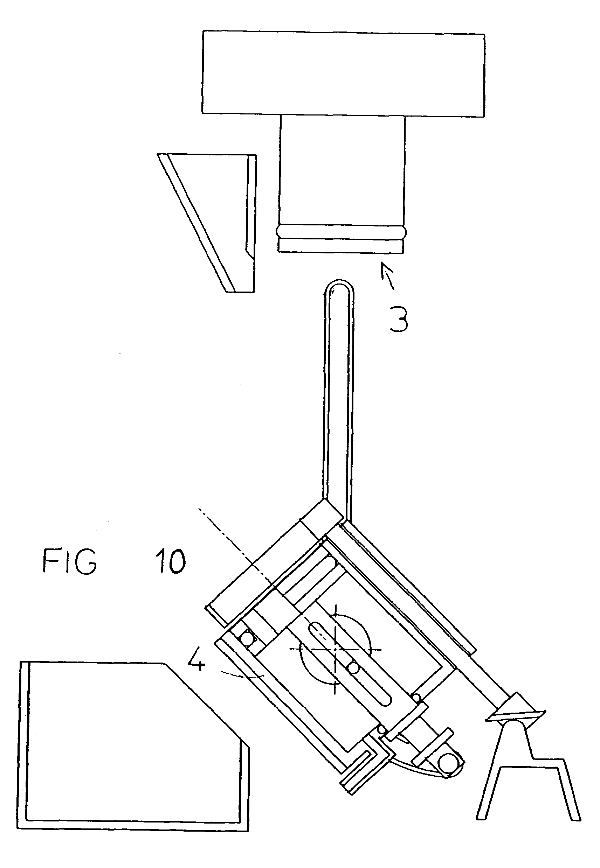

We make now reference to figs. 6 to 10.

The driving means of the expulsion piston 29 are formed directly with the first cam 23.

In this case the first cam 23 is an open loop defined by an elastic element.

The extraction element is now a terminal end 115 of the open loop on which rests the projection 25 when the infusion cylinder moves close to the driving means, while the retraction element is now a slight dent 240 close to the terminal end 115 adapted to temporarily retain the projection 25 when the infusion cylinder 4 moves away from the driving means.

Also in this case, the rod 33 has two sections telescopically associated with the interposition of a spring 114, so to be able to axially shorten when the thrust force prevails thereon from the terminal end 115 of the first cam 23 or from the dent 240 or lengthen when the thrust force of the spring 114 prevails.

In this case the actuation surface 122 for actuation of the second cam 121 of the second cam 121 operated mechanism is provided on a piece separated from driving means.

The functioning of the infusion group of the coffee machine 1 is briefly as follows.

The infusion cylinder 4 is found at travel start below the loader 50 of the coffee powder and preferably with axis slightly tilted back with respected to the vertical.

The expulsion piston 29 is in retracted position and disengaged from the driving means.

At the end of the loading of the coffee powder in the infusion cylinder 4, the infusion cylinder 4 is moved.

During the initial part of ascent, the projection 25 follows a curvilinear section of the first cam 23 which causes a first rotation of the infusion cylinder 4 until the latter aligns with the closure piston 3.

From this moment, the upward driving proceeds with the same angular orientation of the infusion cylinder 4, since the remaining section of the first cam 23 is rectilinear.

The infusion cylinder 4 comes to be engaged with the closure piston 3.

After the infusion the infusion cylinder 4 is moved away from the closure piston 3.

With reference to figures 1-5, the extraction of the expulsion piston 29 occurs as a consequence of a second rotation opposite to the first rotation of the infusion cylinder 4 when the hook-shaped end 111 of the rod 33 of the expulsion piston 29 is blocked between the resting element 112 and the retaining element 113 while the descent of the infusion cylinder 4 proceeds.

At the end of the extraction of the expulsion piston 29 the second cam 121 is activated by the actuation surface 122 to allow scraping away of the spent coffee load from the infusion cylinder 4.

The spent coffee load is collected in a waste container 201.

The retraction of the expulsion piston 29 occurs as a consequence of a third rotation opposite to the second rotation of the infusion cylinder 4 because the hook-shaped end 111 of the rod 33 of the expulsion piston 29 is for a while retained by the retaining element 113 while the ascent of the infusion cylinder 4 proceeds.

With reference to figures 6-10, the extraction of the expulsion piston 29 occurs as a consequence of a second rotation opposite to the first rotation of the infusion cylinder 4 when the projection 25 is blocked at the terminal end 115 of the first cam 23 while the descent of the infusion cylinder 4 proceeds.

The retraction of the expulsion piston 29 occurs as a consequence of a third rotation opposite to the second rotation of the infusion cylinder 4 because the projection 25 is for a while retained by the dent 240 while the ascent of the infusion cylinder 4 proceeds.

The coffee machine infusion group thus conceived is susceptible of many modifications and variations, all of which fall within the scope of the inventive concept as defined in the claims; moreover all details can be replaced by technically equivalent elements.

In practice, the materials used, as well as dimensions, can be of any type according to the particular requirements and the state of the art.

## Claims

1. Coffee machine infusion group (1) comprising a closure piston (3) and an infusion cylinder (4) subjectable to a reversible roto-translation movement between a position of engagement with said closure piston (3) for the creation of an infusion chamber (5) and a position of disengagement from said closure piston (3) for the loading of a coffee powder load, said infusion group (1) having an expulsion system of the spent coffee powder load from said infusion chamber (5), said expulsion system comprising an expulsion piston (29) displaceably housed in said infusion cylinder (4), said expulsion system having mechanical driving means adapted for an interference with said expulsion piston (29), occurring due to the rotational component of said roto-translation movement, for displacement of said expulsion piston (29) relative to said infusion cylinder (4),
**characterised in that** said driving means comprise an extraction element and a retraction element for said expulsion piston (29), said extraction element being a resting element (112) on which rests a hook-shaped end (111) of the rod (33) of said expulsion piston (29) when said infusion cylinder (4) moves close to said driving means, said retraction element being a retaining element (113) for retaining said hook shaped end (111) of said rod (33) when said infusion cylinder (4) moves away from said driving means.

2. Coffee machine infusion group (1) according to claim 1, **characterised in that** of having rotation means for accomplishing said rotational component of said roto-translation movement, said rotation means comprising a first cam (23) for the rotation of said infusion cylinder (4) in which a jutting projection (25) is engaged by said infusion cylinder (4) or by a carrier (9) of said infusion cylinder (4) or by the stem (33) of said expulsion piston (29).

3. Coffee machine infusion group (1) according to any of previous claims, **characterised in that** of having a scraper element (27) pivoted at its top on said infusion cylinder (4) at the side of its access mouth and movable through a second cam (121) operated mechanism across said access mouth in a coordinated manner with said expulsion piston (29).

4. Coffee machine infusion group (1) according to one or more preceding claims, **characterised in that** said extraction element has an actuation surface (122) for actuation of said second cam (121) of said second cam (121) operated mechanism.

5. Coffee machine infusion group (1) according to one or more preceding claims, **characterised in that** said driving means of said expulsion piston (29) are formed directly in said first cam (23).

6. Coffee. machine infusion group (1) according to one or more preceding claims, **characterised in that** said first cam (23) is an open loop defined by an elastic element.

7. Coffee machine infusion group (1) according to one or more preceding claims, **characterised in that** the rod (33) of said expulsion piston (29) has at least two sections which are telescopically associated with the interposition of a spring (114).

8. Coffee machine infusion group (1) according to one or more preceding claims, **characterised in that** said driving means are supported below said infusion cylinder (4) on the internal side of a shell of said coffee machine where said infusion group (1) is housed.

9. Coffee machine infusion group (1) according to one or more preceding claims, **characterised in that** said second cam (121) operated mechanism comprises a hinging pin (123) having at a first its end said scraper (27) and at a second its end said second cam (121).

10. Coffee machine **characterised in that** of having an infusion group (1) according to any of previous claims.

## Patentansprüche

1. Brühgruppe für eine Kaffeemaschine (1), umfassend einen Schließkolben (3) und einen Brühzylinder (4), der einer reversiblen Dreh- und Schiebebewegung zwischen einer Eingriffposition mit dem Schließkolben (3) zur Herstellung einer Brühkammer (5) und einer Löseposition vom Schließkolben (3) zum Laden einer Kaffeepulverladung ausgesetzt werden kann, wobei die Brühgruppe (1) ein Ausstoßsystem der benutzten Kaffeepulverladung aus der Brühkammer (5) aufweist, wobei das Ausstoßsystem einen Ausstoßkolben (29) umfasst, der verschiebbar im Brühzylinder (4) enthalten ist, wobei das Ausstoßsystem mechanische Antriebsmittel aufweist, die für eine Interferenz mit dem Ausstoßkolben (29) geeignet sind, die aufgrund der Drehkomponente der Dreh- und Schiebebewegung auftritt, um den Ausstoßkolben (29) zum Brühzylinder (4) zu verschieben, **dadurch gekennzeichnet, dass** die Antriebsmittel ein Auszugselement und ein Rückzugselement für den Ausstoßkolben (29) umfassen, wobei das Auszugselement ein Auflageelement (112) ist, auf dem ein hakenförmiges Ende (111) des Stabs (33) des Ausstoßkolbens (29) aufliegt, wenn der Brühzylinder (4) sich zu den Antriebsmitteln hinbewegt, wobei das Rückzugselement ein Halteelement (113) ist, um das hakenförmige Ende (111) des Stabs (33) zurückzuhalten, wenn sich der Brühzylinder (4) von den Antriebsmitteln wegbewegt.

2. Brühgruppe für eine Kaffeemaschine (1) nach Anspruch 1, **dadurch gekennzeichnet, dass** sie Rotationsmittel aufweist, um für die Rotationskomponente der Dreh- und Schiebebewegung zu sorgen, wobei diese Rotationsmittel einen ersten Nocken (23) für die Drehung des Brühzylinders (4) umfassen, in den ein ausladender Vorsprung (25) durch den Brühzylinder (4) oder einen Träger (9) des Brühzylinders (4) oder den Stößel (23) des Ausstoßkolbens (29) in Eingriff gelangt.

3. Brühgruppe für eine Kaffeemaschine (1) nach einem der vorhergehenden Ansprüche, **dadurch gekennzeichnet, dass** sie ein Abstreiferelement (27) aufweist, das an seiner Oberseite schwenkbar auf dem Brühzylinder (4) an der Seite seiner Zugangsöffnung gelagert ist und durch einen Mechanismus, betrieben über einen zweiten Nocken (121), durch die Zugangsöffnung auf koordinierte Weise mit dem Ausstoßkolben (29) bewegbar ist.

4. Brühgruppe für eine Kaffeemaschine (1) nach einem oder mehreren der vorhergehenden Ansprüche, **dadurch gekennzeichnet, dass** das Auszugselement eine Betätigungsoberfläche (122) für die Betätigung des zweiten Nockens (121) des Mechanismus, betrieben über den zweiten Nocken (121), aufweist.

5. Brühgruppe für eine Kaffeemaschine (1) nach einem oder mehreren der vorhergehenden Ansprüche, **dadurch gekennzeichnet, dass** die Antriebsmittel des Ausstoßkolbens (29) direkt im ersten Nocken (23) ausgebildet sind.

6. Brühgruppe für eine Kaffeemaschine (1) nach einem oder mehreren der vorhergehenden Ansprüche, **dadurch gekennzeichnet, dass** es sich beim ersten Nocken (23) um einen offenen Kreislauf handelt, der durch ein elastisches Element definiert ist.

7. Brühgruppe für eine Kaffeemaschine (1) nach einem oder mehreren der vorhergehenden Ansprüche, **dadurch gekennzeichnet, dass** der Stab (33) des Ausstoßkolbens (29) mindestens zwei Abschnitte aufweist, die teleskopisch mit dem Einlegen einer Feder (119) verbunden sind.

8. Brühgruppe für eine Kaffeemaschine (1) nach einem oder mehreren der vorhergehenden Ansprüche, **dadurch gekennzeichnet, dass** die Antriebsmittel unter dem Brühzylinder (4) auf der Innenseite einer Hülle der Kaffeemaschine gestützt werden, wo die Brühgruppe (1) enthalten ist.

9. Brühgruppe für eine Kaffeemaschine (1) nach einem oder mehreren der vorhergehenden Ansprüche, **dadurch gekennzeichnet, dass** der über den zweiten Nocken (121) betriebene Mechanismus einen Gelenkzapfen (123) umfasst, aufweisend an einem ersten Ende den Abstreifer (27) und an einem zweiten Ende den zweiten Nocken (121).

10. Kaffeemaschine, **dadurch gekennzeichnet, dass** sie eine Brühgruppe (1) nach einem der vorhergehenden Ansprüche aufweist.

## Revendications

1. Groupe d'infusion de machine à café (1) comprenant un piston de fermeture (3) et un cylindre d'infusion (4) pouvant être exposé à un déplacement de rototranslation réversible entre une position de couplage avec ledit piston de fermeture (3) pour la création d'une chambre d'infusion (5) et une position de découplage dudit piston de fermeture (3) pour le chargement d'une dose de poudre de café, ledit groupe d'infusion (1) disposant d'un système d'expulsion de la dose de poudre de café utilisée à partir de ladite chambre d'infusion (5), ledit système d'expulsion comprenant un piston d'expulsion (29) logé en pouvant se déplacer dans ledit cylindre d'infusion (4), ledit système d'expulsion possédant des moyens d'entraînement mécaniques adaptés pour une interférence avec ledit piston d'expulsion (29) se déroulant par le biais du composant de rotation dudit déplacement de rototranslation, pour le déplacement dudit piston d'expulsion (29) par rapport au dit cylindre d'infusion (4), **caractérisé en ce que** lesdits moyens d'entraînement comprennent un élément d'extraction et un élément d'escamotage pour ledit piston d'expulsion (29), ledit élément d'extraction étant un élément d'arrêt (112) sur lequel repose une extrémité en forme de crochet (111) de la tige (33) dudit piston d'expulsion (29) lorsque ledit cylindre d'infusion (4) se rapproche desdits moyens d'entrainement, ledit élément d'escamotage étant un élément de retenue (113) pour retenir ladite extrémité en forme de crochet (111) de ladite tige (33) lorsque ledit cylindre d'infusion (4) s'éloigne desdits moyens d'entraînement.

2. Groupe d'infusion de machine à café (1) selon la revendication 1, **caractérisé en ce qu'**ayant des moyens de rotation pour accomplir ledit composant de rotation dudit déplacement de rototranslation, lesdits moyens de rotation comprenant une première came (23) pour la rotation dudit cylindre d'infusion (4) dans lequel une saillie (25) est engagée par ledit cylindre d'infusion (4) ou par un support (9) dudit cylindre d'infusion (4) ou par la tige (23) dudit piston d'expulsion (29).

3. Groupe d'infusion de machine à café (1) selon l'une quelconque des revendications précédentes, **caractérisé en ce qu'**ayant un élément racleur (27) monté pivotant en son sommet sur ledit cylindre d'infusion (4) sur le côté de son orifice d'accès et mobile par le biais d'un mécanisme actionné par une seconde came (121) à travers ledit orifice d'accès de manière coordonnée avec ledit piston d'expulsion (29) .

4. Groupe d'infusion de machine à café (1) selon l'une quelconque des revendications précédentes, **caractérisé en ce que** ledit élément d'extraction possède une surface d'actionnement (122) pour actionner ladite seconde came (121) dudit mécanisme actionné par la seconde came (121).

5. Groupe d'infusion de machine à café (1) selon l'une quelconque des revendications précédentes, **caractérisé en ce que** lesdits moyens d'entraînement dudit piston d'expulsion (29) sont directement réalisés dans ladite première came (23).

6. Groupe d'infusion de machine à café (1) selon l'une quelconque des revendications précédentes, **caractérisé en ce que** ladite première came (23) est une boucle ouverte définie par un élément élastique.

7. Groupe d'infusion de machine à café (1) selon l'une quelconque des revendications précédentes, **caractérisé en ce que** la tige (33) dudit piston d'expulsion (29) possède au moins deux sections étant associées de manière télescopique avec l'interposition d'un ressort (119).

8. Groupe d'infusion de machine à café (1) selon l'une quelconque des revendications précédentes, **caractérisé en ce que** lesdits moyens d'entraînement sont supportés en-dessous dudit cylindre d'infusion (4) sur le côté interne d'une enveloppe de ladite machine à café où est logé ledit groupe d'infusion (1).

9. Groupe d'infusion de machine à café (1) selon l'une quelconque des revendications précédentes, **caractérisé en ce que** ledit mécanisme actionné par la seconde came (121) comprend une cheville montée de façon pivotante (123) ayant à sa première extrémité ledit racleur (27) et à sa seconde extrémité ladite seconde came (121).

10. Machine à café **caractérisée en ce qu'**ayant un groupe d'infusion (1) selon l'une quelconque des revendications précédentes.
